# EUROPÄISCHE PATENTSCHRIFT

(11) **EP 3 789 331 B1**
(45) Veröffentlichungstag und Bekanntmachung des Hinweises auf die Patenterteilung: **24.01.2024**
(21) Anmeldenummer: 20174695.5
(22) Anmeldetag: 14.05.2020
(51) Int. Cl.: B66B 1/34, B66B 5/00

(54) **VERFAHREN ZUM BETRIEB EINER AUFZUGANLAGE**
METHOD FOR OPERATING A LIFT DEVICE
PROCÉDÉ DE FONCTIONNEMENT D'UN SYSTÈME D'ASCENSEUR

(30) Priorität: 21.05.2019 DE 102019113558
(43) Veröffentlichungstag der Anmeldung: 10.03.2021
(73) Patentinhaber: Telegärtner Elektronik GmbH, 74564 Crailsheim (DE)
(72) Erfinder: Hopf, Thomas, 86739 Ederheim (DE); Klinger, Joachim, 73479 Ellwangen (DE); Kruska, Dirk, 74572 Blaufelden (DE)
(74) Vertreter: Hafner & Kohl PartmbB

(56) Entgegenhaltungen:
- WO-A1-2007/043557
- JP-A- 2015 202 916
- JP-A- 2018 083 691
- JP-A- 2018 095 402

## Beschreibung

Die Erfindung betrifft ein Verfahren zum Betrieb einer Aufzuganlage, insbesondere einer Personenaufzuganlage, umfassend eine entlang einer Fahrbahn bewegbar gelagerte Aufzugkabine.

Entsprechende Verfahren zum Betrieb einer Aufzuganlage sind aus dem Stand der Technik dem Grunde nach bekannt. Im Fall einer Notsituation kann ein sich im Inneren eines Aufzugs befindlicher Nutzer, typischerweise durch Betätigung eines aufzugseitig verbauten Notfalltasters, über eine aufzugseitig bereitgestellte Mikrophon-Lautsprecher-Anlage mit einem Servicemitarbeiter bzw. mit einem Kommunikationspartner in zumindest mündlichen Kontakt treten. Eine derartige Notsituation kann z. B. im Falle eines "Steckenbleibens" bzw. eines Defekts der Aufzuganlage vorliegen. Insbesondere für Aufzugnutzer mit zumindest temporären körperlichen und/oder geistigen Einschränkungen kann der aufzugseitig bereitgestellte Kommunikationskanal bedingt bzw. eingeschränkt nutzbar sein. Insbesondere diese Personengruppen können in einem stärkeren Maße auf die Nutzung einer Aufzuganlage angewiesen sein, so dass die Steigerung der Sicherheit für die Nutzung einer Aufzuganlage insbesondere für diese Personengruppen erstrebenswert ist.

JP 2018 083691 A beschreibt eine Aufzugsanlage mit einer Funksignaleinrichtung, welche im Normalbetrieb der Aufzugsanlage ausgeschaltet ist und im Falle eines Notfallstopp der Aufzugsanlage aktiviert wird.

JP 2015 202916 A beschreibt ein Notfallsystem für Aufzüge, wobei eine Notfallmeldungsanweisung auf einem mobilen Endgerät eines Nutzers des Aufzugs installiert und das mobile Endgerät in einer Zentraleinrichtung des Aufzugs registriert ist.

JP 2018 095402 A beschreibt eine Steuereinrichtung für einen Aufzug.

WO 2007/043557 A1 beschreibt ein Codesiegel das in einer Kabine angeordnet ist, wobei das Codesiegel einen zweidimensionalen Code mit Zugangsinformationen zu einer Überwachungszentrale aufweist, um im Notfall, wenn der zweidimensionale Code mit einem Endgerät gelesen wird, eine Verbindung zu einer Überwachungseinrichtung in der Überwachungszentrale herzustellen.

Der Erfindung liegt die Aufgabe zugrunde, ein Verfahren anzugeben, welches insbesondere im Hinblick auf eine einfache und schnelle sowie kostengünstige Maßnahme die Möglichkeit der Kommunikation einer außerhalb der Aufzugkabine befindlichen Kommunikationspartner mit einem sich in einer Aufzuganlage befindlichen Nutzer verbessert.

Die Aufgabe wird durch ein Verfahren zum Betrieb einer Aufzuganlage, insbesondere einer Personenaufzuganlage, umfassend eine entlang einer Fahrbahn bewegbar gelagerte Aufzugkabine gemäß Anspruch 1 gelöst. Die hierzu abhängigen Ansprüche betreffen mögliche Ausführungsformen des Verfahrens.

Die Erfindung betrifft ein Verfahren zum Betrieb einer Aufzuganlage, insbesondere einer Personenaufzuganlage, umfassend eine entlang einer Fahrbahn bewegbar gelagerte Aufzugkabine. Das Verfahren zeichnet sich durch die folgenden Schritte aus: (a) Erzeugen einer eine Notrufsituation der Aufzuganlage beschreibenden Notrufinformation; (b) Bereitstellen einer zumindest temporären drahtlosen Kommunikationsinfrastruktur innerhalb der Aufzugkabine über eine, insbesondere der Aufzugkabine zugeordnete, Kommunikationsinfrastrukturerzeugungseinrichtung, (c) Verbinden eines Kommunikationsgeräts eines in der Aufzugkabine befindlichen Nutzers mit der innerhalb der Aufzugkabine erzeugten drahtlosen Kommunikationsinfrastruktur.

Eine Notrufsituation der Aufzuganlage kann im Falle eines Defekts der Aufzuganlage, z. B. im Falle der nicht Weiterfahrt der Aufzugkabine vorliegen. Dabei kann es vorkommen, dass sich die Aufzugkabine in einer Position befindet, die typischerweise nicht für das Öffnen der Aufzugtüren freigegeben ist, sodass ein sich in der Aufzugkabine befindlicher Nutzer in dieser eingesperrt sein kann. Auch kann bei Vorliegen einer funktionstüchtigen Aufzuganlage eine Notrufsituation der Aufzuganlage im vorliegenden Sinne vorliegen, z. B. wenn ein die Aufzuganlage nutzender Nutzer an sich selbst oder an einem Dritten eine gesundheitliche Einschränkung meint zu erkennen. Allgemein kann eine Notrufsituation eine Fülle an Ereignissen darstellen, die mit dem Wunsch der Kommunikation zwischen einer aufzugkabinenseitig positionierten Person, typischerweise eines Aufzugnutzers bzw. Nutzers, und mit einer, typischerweise von der Aufzugkabine entfernt positionierten, Serviceperson des Aufzuganlagenbetreibers bzw. einer Kontaktperson verbunden ist. Die Kommunikation soll hierbei vorzugsweise ausgehend von dem Vorliegen einer Notrufsituation erfolgen, wobei eine Notrufinformation erzeugt wird. Das Erzeugen der eine Notrufsituation der Aufzuganlage beschreibenden Notrufinformation erfolgt erfindungsgemäß durch Betätigen eines aufzugkabinenseitigen Betätigungselements, z. B. durch manuelles Betätigen eines aufzugseitig platzierten Notruftasters und/oder -schalters durch einen Nutzer des Aufzugs. Alternativ oder zusätzlich erfolgt die Notrufinformation erfindungsgemäß durch eine kommunikationsgerätseitige Eingabeeinrichtung, z. B. durch das Mikrofon des Kommunikationsgeräts. Zum Beispiel kann ein in der Aufzugkabine befindlicher Nutzer durch Nutzung eines kommunikationsgerätseitigen Sprachassistenten bzw. Spracherkennungssystems (z. B. ein sprachgesteuerter, insbesondere internetbasierter, Intelligenter persönlicher Assistent wie Google Assistent, Siri, Amazon Echo, o. Ä.) eine Notrufinformation erzeugen und/oder weiterleiten bzw. übermitteln lassen. Alternativ oder zusätzlich wird die Notrufinformation erfindungsgemäß von einer Person außerhalb der Aufzugkabine oder einem mit einer eine Notrufsituation erfassenden Erfassungseinrichtung verbundenen Rechner, insbesondere automatisiert, erzeugt. Hierzu kann die Aufzugkabine z. B. mit einer den Innenraum der Aufzugkabine erfassenden Kamera ausgestattet sein, wobei eine das Bild dieser Kamera sichtende Person oder ein das Bild dieser Kamera automatisiert analysierende Rechner bei Vorliegen eines vordefinierten Notfallmusters bzw. Notsituation eine Notrufinformation automatisiert erzeugt. Ein außerhalb der Aufzugkabine platzierter Kommunikationspartner kann z. B. eine Serviceperson des Aufzugbetreibers und/oder eine Serviceperson einer zentralen, für mehrere Aufzuganlagen zuständigen, räumlich entfernt von dem Aufstellort der Aufzuganlage gelegene Institution sein. Damit kann z. B. der Kommunikationspartner ein Pförtner und/oder ein Hausmeister des bzw. der mit der Aufzugeinrichtung versehenen Einrichtung sein.

Der Kommunikationspartner kann dabei zumindest temporär ein Mensch und/oder eine Maschine sein. Beispielsweise erfolgt in einem ersten Schritt der Kommunikation des in der Aufzugeinrichtung befindlichen Nutzers mit dem Kommunikationspartner ein Informationsaustausch zwischen dem Nutzer und einem Rechner bzw. einem Algorithmus. In einem nachgelagerten Schritt kann beispielsweise ein Informationsaustausch zwischen dem Nutzer und einer natürlichen Person bzw. einem Menschen erfolgen. Insbesondere der vermittels eines Rechners bzw. eines Algorithmus erfolgende Informationsaustausch kann eine automatisierte Übermittlung von Fragen und das Empfangen, und insbesondere Auswerten, von Antworten des Nutzers umfassen. Vorzugsweise kann hierbei anhand von dem Algorithmus dem Nutzer vorgegebenen Antwortmöglichkeiten eine schnelle und zielgerichteter Informationsaustausch erfolgen, um eine Notfallsituation in kurzer Zeit richtig einzuschätzen. Alternativ oder zusätzlich kann der Algorithmus auf Künstlicher Intelligenz (KI) und/oder auf Artifizielle Intelligenz basieren.

Innerhalb der Aufzugkabine wird eine zumindest temporäre drahtlose Kommunikationsinfrastruktur über eine Kommunikationsinfrastrukturerzeugungseinrichtung bereitgestellt. Die Kommunikationsinfrastrukturerzeugungseinrichtung kann vorzugsweise zumindest teilweise in oder an der Aufzuganlage, insbesondere in oder an der Aufzugkabine, angeordnet oder ausgebildet sein. Beispielsweise ist die Kommunikationsinfrastrukturerzeugungseinrichtung als Sende- und Empfangseinheit ausgebildet und wird über eine aufzuganlagenseitige elektrische Energieversorgungseinrichtung und/oder über eine von der Aufzuganlage entkoppelte elektrische Energieversorgungseinrichtung mit Strom versorgt bzw. betrieben. Hierzu kann die Energieversorgungseinrichtung beispielsweise einen elektrischen Energiespeicher bzw. einen Akku umfassen.

In einem weiteren Schritt erfolgt ein Verbinden eines Kommunikationsgeräts eines in der Aufzugkabine befindlichen Nutzers mit der innerhalb der Aufzugkabine bereitgestellten oder erzeugten drahtlosen Kommunikationsinfrastruktur. Das Kommunikationsgerät kann z. B. in Form eines elektronischen Mobilgeräts bzw. elektronischen Endgeräts ausgebildet sein. Beispielsweise kann als elektronisches Endgerät ein Smartphone, ein Tabletcomputer, eine Smartwatch und/oder ein tragbarer Computer (z.B. Laptop) verwendet werden. Beispielsweise kann das Kommunikationsgerät als "Wearable Computing", d. h. als tragbare Datenverarbeitung bzw. als tragbares Computersystem ausgebildet sein, wobei während der Anwendung des Computersystems dieses am Körper des Benutzers getragen wird, wie z. B. eine Smartwatch und/oder eine Datenbrille und/oder ein Herzschrittmacher und/oder ein Hörgerät und/oder ein in einer Kleidung integriertes Computersystem. Das Kommunikationsgerät ist mit einer kabellosen Datenverbindungseinheit versehen, vermittels der das Kommunikationsgerät mit der Kommunikationsinfrastruktur verbindbar ist. Auf diese Weise wird es dem in der Aufzugkabine befindlichen Nutzer ermöglicht, eine Kommunikationsverbindung über dessen Kommunikationsgeräts mit der Kommunikationsinfrastruktur und damit mit einer kommunikationsinfrastrukturseitigen Kommunikationspartner herzustellen und sich mit dieser auszutauschen.

Es ist möglich, dass die Kommunikationsinfrastruktur standardmäßig bereitgestellt wird. Alternativ oder zusätzlich kann die Kommunikationsinfrastruktur ereignisabhängig oder handlungsabhängig, zumindest temporär, erzeugt werden. Beispielsweise kann es zweckmäßig sein, dass ein Erzeugen einer zumindest temporären drahtlosen Kommunikationsinfrastruktur innerhalb der Aufzugkabine über eine der Aufzugkabine zugeordnete Kommunikationsinfrastrukturerzeugungseinrichtung in Abhängigkeit des Vorliegens einer entsprechenden Notrufinformation erfolgt. Dabei kann es in einer bevorzugten Ausführungsform vorgesehen sein, dass nur, d. h. ausschließlich bei Vorliegen einer Notrufinformation d. h. zwingend in Abhängigkeit eines Vorliegens einer Notrufinformation, eine zumindest temporäre drahtlose Kommunikationsinfrastruktur innerhalb der Aufzugkabine erzeugt über die der Aufzugkabine zugeordnete Kommunikationsinfrastrukturerzeugungseinrichtung erzeugt wird. Dies kann dadurch erfolgen, dass ein sich in der Aufzugkabine befindlicher Nutzer einen Notruftaster betätigt, oder eine, insbesondere optische, Erfassungseinrichtung eine Notrufsituation durch deren Vergleich der erfassten Information mit einem vordefinierten Muster erkennt. Alternativ oder zusätzlich kann die Betriebsweise und/oder der Betriebszustand der Aufzuganlage überwacht werden und im Falle einer, insbesondere vordefinierten, detektierten bzw. erfassten Fehlfunktion automatisiert und/oder manuell eine Notrufinformation erzeugt werden. Die Notrufinformation kann beispielsweise zur Erzeugung eines Steuerungssignals oder zur Erzeugung einer kommunikationsinfrastrukturseitigen Handlungsabfrage an einen Kommunikationspartner und/oder den in der Aufzugkabine befindlichen Nutzer, nach dessen und/oder deren Bestätigung ein Steuerungssignal erzeugt wird, führen. Das Steuerungssignal kann z. B. eine Kommunikationsinfrastrukturerzeugungseinrichtung ansteuern und initiiert die Erzeugung einer Kommunikationsinfrastruktur. Die Kommunikationsinfrastrukturerzeugungseinrichtung kann z. B. als Router ausgebildet sein, der in oder an der Aufzugkabine angeordnet ist. Dieses Vorgehen hat den Vorteil, dass die Kommunikationsinfrastruktur bedarfsweise erzeugt und damit bedarfsweise bereitgestellt wird. Dies kann zu einem geringeren Energieverbrauch und einer höheren Zuverlässigkeit für die Bereitstellung der Kommunikationsinfrastruktur führen.

Das Erzeugen der temporären drahtlosen Kommunikationsinfrastruktur innerhalb der Aufzugkabine über die der Aufzugkabine zugeordnete Kommunikationsinfrastrukturerzeugungseinrichtung kann beispielsweise nach Erfassen einer aufzugkabinenseitig angeordneten oder ausgebildeten Initiierungsstruktur durch das Kommunikationsgerät des in der Aufzugkabine befindlichen Nutzers erfolgen. Die Initiierungsstruktur kann z. B. als Bar- oder QR-Code ausgebildet sein und beispielsweise über einen Aufkleber an einer Wand der Aufzugkabine für den Nutzer der Aufzugkabine visuell wahrnehmbar vorliegen. Die Initiierungsstruktur kann z. B. dazu verwendet werden, dass ein Nutzer auf einfache und komfortable Weise seinem Kommunikationsgerät einen Befehl zur Verbindung mit einer Kommunikationsinfrastruktur erteilt. Alternativ oder zusätzlich kann eine Initiierungsstruktur verwendet werden, um dem nutzerseitigen Kommunikationsgerät einen Download eines Programms (z. B. einer Notsituationssoftware) auf das Kommunikationsgerät anzubieten und/oder auszuführen. Auch kann durch die Initiierungsstruktur ein Rechtemanagement zwischen einem Kommunikationsgerät und einer Kommunikationsinfrastruktur festgelegt und/oder einem kommunikationsgerätseitigen Nutzer vorgeschlagen werden. Insbesondere das Aufspielen eines Computerprogramms bzw. einer App auf das Kommunikationsgerät kann den Vorteil bergen, dass ein derartiges Computerprogramm eine vereinfachte und/oder eine zuverlässigere Kommunikation zwischen der Kommunikationsinfrastruktur und dem Kommunikationsgerät ermöglicht.

Es ist möglich, dass zwischen dem Kommunikationsgerät des in der Aufzugkabine befindlichen Nutzers und einem externen Kommunikationspartner über das mit der innerhalb der Aufzugkabine bereitgestellten und/oder erzeugten drahtlosen Kommunikationsinfrastruktur verbundenen Kommunikationsgerät des in der Aufzugkabine befindlichen Nutzers eine Kommunikationsverbindung hergestellt wird. Insbesondere wird eine bidirektionale Kommunikationsverbindung hergestellt. Mit anderen Worten kann über die Kommunikationsverbindung ein in der Aufzugkabine befindlicher Nutzer mit einem außerhalb der Aufzugkabine befindlichen Kommunikationspartner in einen Informationsaustausch treten, wobei der Informationsfluss ein- oder zweiseitig erfolgen kann. Typischerweise kann der Kommunikationspartner ein für Notfallsituationen, insbesondere für Notfallsituationen in bzw. an Aufzuganlagen, geschulte Serviceperson sein, die einem in einer Aufzugkabine befindlichen Nutzer sowohl fachliche bzw. technische Hilfestellung, als auch psychologische Hilfestellung geben kann.

Über die hergestellte Kommunikationsverbindung können beispielsweise zwischen dem Kommunikationsgerät des in der Aufzugkabine befindlichen Nutzers und dem externen Kommunikationspartner Audio- und/oder Videoinformationen dem nutzerseitigen Kommunikationsgerät an den externen Kommunikationspartner und/oder von dem externen Kommunikationspartner an das nutzerseitige Kommunikationsgerät übertragen werden. So kann der in der Aufzugkabine befindliche Nutzer einem sich räumlich getrennt befindlichen Kommunikationspartner akustische und/oder optische Informationen übermitteln, insbesondere die Bildinformation oder Filminformation kann hierbei dem, vorzugsweise technisch geschulten, Kommunikationspartner eine zielführende Information darstellen, um die Notfallsituation bzw. die Situation innerhalb der Aufzugkabine schnell und zutreffend einzuschätzen. Mit anderen Worten kann ein Video- und/oder Audiochat zwischen dem in der Aufzugkabine befindlichen Nutzer und der Kommunikationspartner ausführbar sein.

Über die hergestellte Kommunikationsverbindung zwischen dem Kommunikationsgerät des in der Aufzugkabine befindlichen Nutzers und dem externen Kommunikationspartner können beispielsweise an den Nutzer gerichtete Handlungsanweisungen beschreibende Handlungsinformationen an das Kommunikationsgerät des in der Aufzugkabine befindlichen Nutzers übertragen werden. So kann z. B. ein innerhalb der Aufzugkabine befindlicher Nutzer durch den Kommunikationspartner aufgefordert werden, definierte und von dem Kommunikationspartner vorgegebene Handlungen auszuführen. Durch die Übermittlung von Video- und/oder Audioinformationen kann sowohl das Instruieren, die Überwachung und/oder die Prüfung des Ergebnisses der vorgegebenen und durch den Nutzer auszuführenden Handlungen auf einfache und zuverlässige Weise durch den Kommunikationspartner erfolgen.

Beispielsweise ist die durch den in der Aufzugkabine befindlichen Nutzer auszuführende Handlung durch eine Anzeige einzelner Handlungsdetails auf einer Anzeigeeinheit des Kommunikationsgeräts des Nutzers gestützt bzw. für den Nutzer visualisiert. Hierbei kann auf der Anzeigeeinheit Informationen in Form von Text, Bild und/oder eines Films angezeigt werden.

In einer besonders vorteilhaften Ausführungsform umfasst die Anzeige der Handlungsdetails an dem Kommunikationsgerät des Nutzers zumindest teilweise eine Darstellung basierend auf einem Verfahren der erweiterten Realität auch "augmented realtiy"-Verfahren bezeichnet. Hierbei werden Informationen der Handlung auf der Anzeigeeinheit des Kommunikationsgeräts überlagert bzw. eingeblendet mit realen Bildinformationen angezeigt. Die realen Bildinformationen können beispielsweise zumindest teilweise durch eine kommunikationsgerätseitige Erfassungseinrichtung, insbesondere eine kommunikationsgerätseitige Kamera, erzeugt sein. Alternativ oder zusätzlich kann die Bildinformation zumindest teilweise und/oder zumindest temporär durch eine aufzugkabinenseitige Erfassungseinrichtung erzeugt sein. Damit kann einerseits der in der Aufzugkabine befindliche Nutzer eine durch die Anzeigeeinheit gestützte Anweisung ausführen und ihm eine zielgerichtete "Anleitung" bereitgestellt werden. Zugleich kann eine Kommunikationspartner der Ausführung einer Handlungsanweisung durch den in der Aufzugkabine befindlichen Nutzer ausgeführte Handlung nachvollziehen und hierbei zeitnah etwaige Hilfestellungen geben. Die Handlungen können die Aufzuganlage, einen zusätzlich zum Nutzer in der Aufzugkabine befindlichen Dritten und/oder den in der Aufzugkabine befindlichen Nutzer selbst betreffen. Sie Handlungen können z. B. technische und/oder medizinische und/oder psychologische Aspekte betreffen, um einen Defekt der Aufzuganlage und/oder einem beeinträchtigten Gesundheitszustand einer in der Aufzugkabine befindlichen Person entgegenzuwirken.

Es kann vorgesehen sein, dass über die hergestellte Kommunikationsverbindung zwischen dem Kommunikationsgerät des in der Aufzugkabine befindlichen Nutzers und dem externen Kommunikationspartner an den Nutzer gerichtete, den Status der Notrufsituation, insbesondere den Status der Behebung der Notrufsituation, beschreibende Statusinformationen an das Kommunikationsgerät des in der Aufzugkabine befindlichen Nutzers übertragen werden. Dadurch, dass dem in der Aufzugkabine befindlichen Nutzer Statusinformationen an dessen Kommunikationsgerät übermittelt werden, kann dem Nutzer der Fortschritt und/oder die verbleibende Bearbeitungszeit für die Behebung der Notfallsituation übermittelt werden. Damit wird der in der Aufzugkabine befindliche Nutzer in die Lage versetzt, sich auf die aktuelle Situation besser einzustellen. Die Statusinformation kann beispielsweise als Fortschrittsbalken auf der Anzeigeeinheit des Kommunikationsgeräts des in der Aufzugkabine befindlichen Nutzers ausgegeben werden. Der Kommunikationspartner kann seinerseits ein Problemmanagementsystem mit Informationen versorgen bzw. Problembehebungsprozessschritte abarbeiten und/oder deren Erledigung bestätigen, so dass ausgehend von dem Problemmanagementsystem, insbesondere automatisiert, die Statusinformation an das Kommunikationsgerät übermittelbar ist. Alternativ oder zusätzlich kann die über das Kommunikationsgerät und die Kommunikationsinfrastruktur erfolgende Kommunikation zwischen der in der Aufzugkabine befindlichen Person und der Kommunikationspartner aufgezeichnet werden. Derartige Aufzeichnungen können zu Dokumentationszwecken mit, insbesondere automatisiert, zugeordneten Zeitangaben versehen sein.

Alternativ oder zusätzlich kann es vorgesehen sein, dass über die hergestellte Kommunikationsverbindung zwischen dem Kommunikationsgerät des in der Aufzugkabine befindlichen Nutzers und dem externen Kommunikationspartner den Zustand des Nutzers, insbesondere den Gesundheitszustand des Nutzers, beschreibende Nutzerzustandsinformationen an den externen Kommunikationspartner übertragen werden. Die Nutzerzustandsinformationen können über eine direkte manuelle Eingabe einer Information durch den Nutzer in dessen Kommunikationsgerät erfolgen. Alternativ oder zusätzlich kann eine Nutzerzustandsinformation durch eine kommunikationsgerätseitig angeordnete oder ausgebildete Zustandserfassungseinrichtung erfolgen. Beispielsweise erfasst die kommunikationsgerätseitige Zustandserfassungseinrichtung den Pulsschlag, den Blutdruck, die Körpertemperatur, die Pupillenweitung, die Pupillenbewegung und/oder sonstige haptisch und/oder visuell und/oder akustisch erfassbare medizinische Ereignisse bzw. Indikatoren zu dem in der Aufzugkabine befindlichen Nutzers und übermittelt diese Nutzerzustandsinformationen an den Kommunikationspartner. Alternativ oder zusätzlich kann eine Nutzerzustandsinformation aus einem kommunikationsgerätseitigen Datenspeicher hinterlegt bzw. für einen Kommunikationspartner in dem Datenspeicher abrufbar vorgehalten werden. Der Kommunikationspartner kann anhand der ihm übermittelten Informationen, z. B. anhand der Vitalparameter, des in der Aufzugkabine befindlichen Nutzers eine medizinische Analyse zu dessen Gesundheitszustand, d. h. zu dessen psychischer und/oder physischer Verfassung vornehmen. Im Falle der in einem Datenspeicher hinterlegten Informationen können diese z. B. medizinische Informationen zu dem Nutzer, wie beispielsweise dessen Medikamentenplan, Allergien, Blutgruppe oder anderweitige Unverträglichkeiten, dessen medizinische Einschränkungen bzw. medizinische Eigenheiten und/oder Behinderungen umfassen. Mit anderen Worten kann eine Art Gesundheits- bzw. Notfallpass des in der Aufzugkabine befindlichen Nutzers in dem Datenspeicher des Kommunikationsgeräts hinterlegt sein, die im Notruffall durch eine Kommunikationspartner zur Abrufung bereitliegen.

In einer weiteren vorteilhaften Ausführungsform ist es vorgesehen, dass über die hergestellte Kommunikationsverbindung zwischen dem Kommunikationsgerät des in der Aufzugkabine befindlichen Nutzers und dem externen Kommunikationspartner, insbesondere unabhängig von Bedienhandlungen des Nutzers, wenigstens einen Betriebszustand wenigstens einer kommunikationsgeräteseitigen Funktionseinheit, insbesondere einer Audio- und/oder Videoerfassungseinrichtung, steuernde Steuerungsinformationen von dem externen Kommunikationspartner an das Kommunikationsgerät des in der Aufzugkabine befindlichen Nutzers übertragen werden. Durch den direkten Zugriff des Kommunikationspartner auf wenigstens eine Funktionseinheit des Kommunikationsgeräts wird es dem Kommunikationspartner ermöglicht, auch im Falle eines an der Bedienung des Kommunikationsgerät gehinderten, in der Aufzugkabine befindlichen Benutzers die Funktionalitäten des Kommunikationsgerät vermittels entsprechende, durch den Kommunikationspartner initiierte Steuerungsinformationen, zu nutzen.

Beispielsweise kann der Kommunikationspartner nach einer direkt zeitlich vor dem Zugriff des Kommunikationsgerät gelegenen Zustimmung des Nutzers oder ohne eine direkt zeitlich vor dem Zugriff des Kommunikationsgerät gelegenen Zustimmung des Nutzers beispielsweise das Mikrofon und/oder die Kamera des Kommunikationsgerät aktivieren und damit erzeugte Mikrofoninformationen und/oder Kamerainformationen lesen bzw. abgreifen. Auch kann der Zugriff des Kommunikationspartners auf das Kommunikationsgerät des in der Aufzugkabine befindlichen Nutzers ein Auslesen des Datenspeichers des Kommunikationsgerät umfassen. Auf diese Weise kann der Kommunikationspartner z. B. auf Kontaktdaten des Nutzers lesend zugreifen, um in einer Notrufsituation einen geeigneten Ansprechpartner, z. B. Ehepartner, Verwandte und/oder Hausarzt, zu identifizieren, um ggf. zeitkritische Fragestellungen mit dem geeigneten Ansprechpartner zu klären.

Alternativ oder zusätzlich kann der Zugriff des Kommunikationspartner auf das Kommunikationsgerät des in der Aufzugkabine befindlichen Nutzers auch technische Informationen des Kommunikationsgerät selbst betreffen, z. B. Modell des Kommunikationsgerät, Betriebssystem des Kommunikationsgerät, Funktionalitätsumfang des Kommunikationsgerät. Damit kann dem Kommunikationspartner z. B. angezeigt werden, ob gewisse Funktionseinheiten des Kommunikationsgerät defekt bzw. nicht nutzbar sind.

Beispielsweise kann es vorgesehen sein, dass der Kommunikationspartner den Akkuzustand des Kommunikationsgerät des in der Aufzugkabine befindlichen Nutzers einsehen kann. Damit kann der Kommunikationspartner abschätzen, ob das Aktivieren und/oder Deaktivieren von Funktionalitäten bzw. von Funktionseinheiten des Kommunikationsgeräts in der vorliegenden Situation geboten ist. Beispielsweise könnte durch das Aktivieren wenigstens einer Funktionseinheit, wie beispielsweise der Kamera, der Akkuzustand derart schnell reduziert werden, dass die Kommunikationsverbindung des in der Aufzugkabine befindlichen Nutzer und der Kommunikationspartner über Kommunikationsinfrastruktur nach kurzer Zeit auf Grund eines entladenen Akkus des Kommunikationsgerät abgebrochen wird. Mit anderen Worten wird es mit der Auslesbarkeit des Akkuzustands des Kommunikationsgeräts dem Kommunikationspartner eine Abwägung ermöglicht, ob die Option der Aktivierung einer kommunikationsgeräteseitigen Funktionseinheit und die damit einhergehende Informationsgewinnung dem Verkürzen der möglichen Verbindungszeit zwischen dem Kommunikationsgerät bzw. dem Nutzer und dem Kommunikationspartner vertretbar ist.

In einer vorteilhaften Ausführungsform kann vorgesehen sein, dass nach einem Verbinden des Kommunikationsgeräts des in der Aufzugkabine befindlichen Nutzers mit der innerhalb der Aufzugkabine bereitgestellten und/oder erzeugten drahtlosen Kommunikationsinfrastruktur ein, insbesondere automatisiertes, Herunterladen einer seitens eines Betreibers der Aufzuganlage bereitgestellten Notsituationssoftware auf das Kommunikationsgerät des Nutzers und/oder ein, insbesondere automatisiertes, Aktivieren einer auf dem Kommunikationsgerät des Nutzers befindlichen Notsituationssoftware erfolgt. Damit kann der Informationsaustausch über die Kommunikationsverbindung bzw. über die Kommunikationsinfrastruktur zwischen dem Kommunikationsgerät und dem Kommunikationspartner vereinfacht, beschleunigt und/oder zuverlässiger gestaltet werden. Insbesondere ein Rechtemanagement bzgl. der nutzerseitig zugestimmten Rechte des Zugriffs auf Informationen und Funktionalitäten des Kommunikationsgeräts durch den Kommunikationspartner in der Notrufsituation, ermöglicht eine schnelle Reaktion bzw. ein schnelles und unkompliziertes Eingreifen des Kommunikationspartners.

Beispielsweise kann vermittels der Notsituationssoftware ein Ausgeben von eine Abfrage von die Notrufsituation und/oder den Zustand des in der Aufzugkabine befindlichen Nutzers betreffenden Abfrageinformationen und/oder ein Ausgeben von Handlungsanweisungen an den in der Aufzugkabine befindlichen Nutzer betreffende Handlungsanweisungsinformationen initiiert werden.

Beispielsweise kann vermittels der Notsituationssoftware eine Abfrage von die Notrufsituation und/oder den Zustand des in der Aufzugkabine befindlichen Nutzers betreffenden Abfrageinformationen und/oder ein Ausgeben von Handlungsanweisungen an den in der Aufzugkabine befindlichen Nutzer betreffende Handlungsanweisungsinformationen initiiert werden. Die Abfrageinformation kann z. B. das Einverständnis des Nutzers mit einem erweiterten Zugriff auf das Kommunikationsgerät sein. Alternativ oder zusätzlich kann die Abfrageinformation eine technische, die Aufzuganlage betreffende Frage oder eine medizinische, den Nutzer und/oder eine weitere Person in der Aufzugkabine befindliche Person betreffende Frage umfassen. Eine Handlungsanweisungsinformation kann z. B. eine Anleitung zumindest des in der Aufzugkabine befindlichen Nutzers sein, um diesen eine Hilfe zur Selbsthilfe zu geben. Diese angeleitete Selbsthilfe kann technische Informationen zum Einwirken auf die Aufzuganlage und/oder das Kommunikationsgerät umfassen. Alternativ oder zusätzlich kann die angeleitete Selbsthilfe medizinische Informationen umfassen. Schließlich kann alternativ oder zusätzlich die Handlungsanweisung unterhaltenden Charakter haben, insbesondere im Fall, dass die Behebung eines aufzuganlagenseitigen Defekts einen längeren Zeitraum in Anspruch nehmen sollte, kann dies von Vorteil sein.

Die Kommunikationsinfrastruktur kann beispielsweise als eine, gegebenenfalls verschlüsselte, Bluetooth- und/oder WLAN-Infrastruktur bereitgestellt bzw. erzeugt werden. Hierbei können Daten zwischen der Kommunikationsinfrastruktur und dem Kommunikationsgerät über die Kommunikationsverbindung ausgetauscht werden. Die Kommunikationsverbindung kann z. B. als in wenigstens einer der OSI-Schichten 3 bis 7 erfolgen. So kann ein Informationsaustausch beispielsweise über ein HTTP-, ein TCP-, ein UDP- und/oder ein IP-Protokoll erfolgen. Die Anzeige der Informationen kann beispielsweise kommunikationsgerätseitig über einen Browser, d. h. browsergestützt, und/oder über eine die Informationen auslesende bzw. anzeigende Notsituationssoftware erfolgen. Auch kann es vorgesehen sein, dass bei der Kommunikationsverbindung als Kopplungselement ein Gateway, Content-Switch, Proxy, Layer-4-7-Switch, Router und/oder Layer-3-Switch eingesetzt wird. Der Informationsaustausch kann beispielsweise auch durch eine Pear-to-pear-Verbindung und/oder durch eine Voice over IP (VoIP) Verbindung zwischen dem Kommunikationsgerät des in der Aufzugskabine befindlichen Nutzer und dem Kommunikationspartner erfolgen.

Die Erfindung ist anhand von Ausführungsbeispielen in den Zeichnungen näher erläutert. Dabei zeigt:
- Fig. 1: eine Prinzipdarstellung einer Aufzuganlage gemäß einem Ausführungsbeispiel;

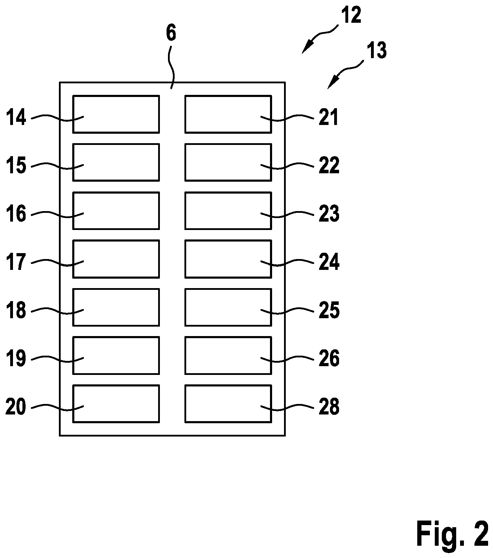

- Fig. 2: eine Prinzipdarstellung eines Kommunikationsgeräts gemäß einem Ausführungsbeispiel;

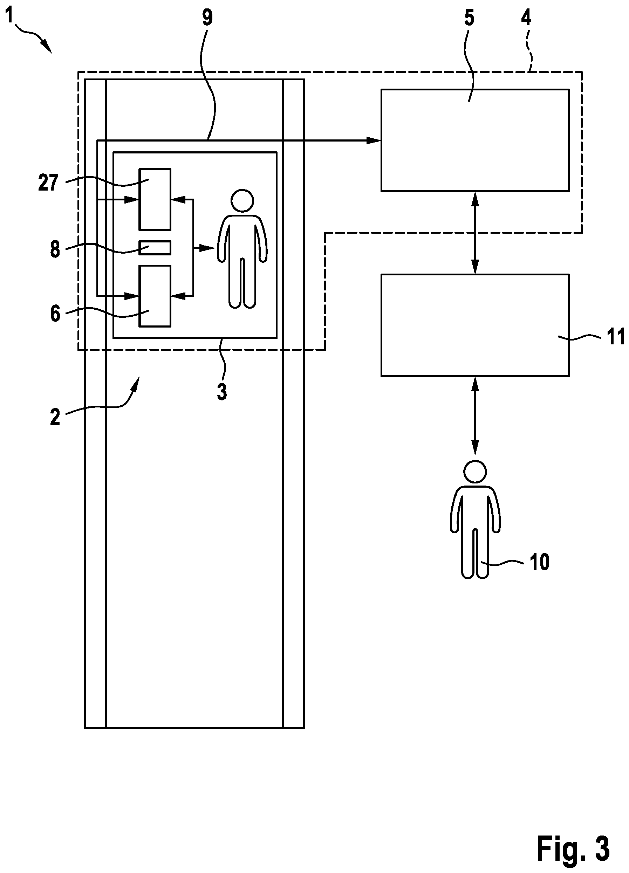

- Fig. 3: eine Prinzipdarstellung einer Aufzuganlage gemäß einem Ausführungsbeispiel;
- Fig. 4: ein schematisches Ablaufdiagramm zu dem Verfahren zum Aufbau einer Kommunikationsverbindung zwischen dem Kommunikationsgerät und der Kommunikationsinfrastruktur gemäß einem Ausführungsbeispiel;
- Fig. 5: ein schematisches Ablaufdiagramm zu dem Verfahren zum Aufbau einer Kommunikationsverbindung zwischen dem Kommunikationsgerät und der Kommunikationsinfrastruktur gemäß einem Ausführungsbeispiel.

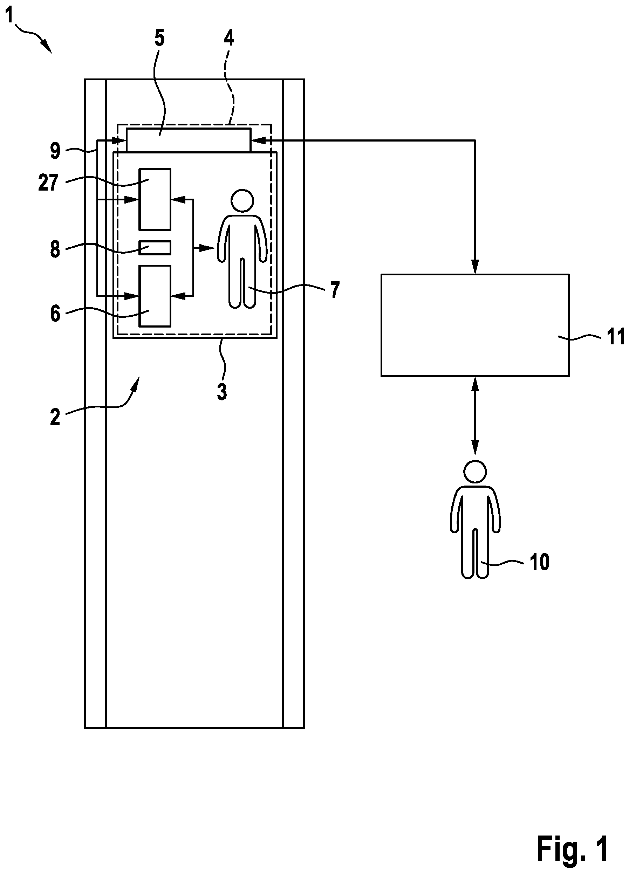

Figur 1 zeigt eine Aufzuganlage 1, insbesondere einer Personenaufzuganlage, umfassend eine entlang einer Fahrbahn 2 bewegbar gelagerte Aufzugkabine 3, wobei bei Erzeugen bzw. bei Vorliegen einer eine Notrufsituation der Aufzuganlage 1 beschreibenden Notrufinformation 100 eine Bereitstellung einer zumindest temporären drahtlosen Kommunikationsinfrastruktur 4 innerhalb der Aufzugkabine 3 über eine, insbesondere der Aufzugkabine 3 zugeordnete, Kommunikationsinfrastrukturerzeugungseinrichtung 5 erfolgt. Ferner erfolgt ein Verbinden eines Kommunikationsgeräts 6 eines in der Aufzugkabine 3 befindlichen Nutzers 7 mit der innerhalb der Aufzugkabine 3 bereitgestellten bzw. erzeugten drahtlosen Kommunikationsinfrastruktur 4.

Die Kommunikationsinfrastrukturerzeugungseinrichtung 5 kann, wie in Figur 1 dargestellt in oder an der Aufzugkabine 3 angeordnet sein. Alternativ ist die Kommunikationsinfrastrukturerzeugungseinrichtung 5 von der Aufzugkabine 3 entkoppelt bzw. nicht in unmittelbaren Kontakt mit der Aufzugkabine 3 in dem die Aufzuganlage 1 umfassenden Gebäude (nicht dargestellt) derart angeordnet, dass im Falle der Bereitstellung und/oder des Erzeugens der Kommunikationsinfrastruktur 4 die Aufzugkabine 3 davon mit abgedeckt wird. Beispielsweise wird ein als WLAN ausgebildete Kommunikationsinfrastruktur 4 durch die Kommunikationsinfrastrukturerzeugungseinrichtung 5 bereitgestellt und/oder bedarfsweise erzeugt.

Die Kommunikationsinfrastruktur 4 kann bedarfsweise nach Vorliegen einer Notrufinformation 100 durch die Kommunikationsinfrastrukturerzeugungseinrichtung 5 erzeugt werden oder kann permanent in einem vollfunktionstüchtigen Zustand oder in einem Bereitschaftszustand bzw. Schlafzustand vorliegen. Zumindest in einem, wenigstens nur eine Teilfunktionalität bereitstellenden Bereitschaftszustand kann es vorgesehen sein, dass nach Vorliegen der Notrufinformation 100 die Kommunikationsinfrastrukturerzeugungseinrichtung 5, insbesondere automatisiert, in einen (voll-)aktiven Zustand geschaltet wird. Damit kann ein Erzeugen einer zumindest temporären drahtlosen Kommunikationsinfrastruktur 4 innerhalb der Aufzugkabine 3 über eine der Aufzugkabine 3 zugeordnete Kommunikationsinfrastrukturerzeugungseinrichtung 5 in Abhängigkeit des Vorliegens einer entsprechenden Notrufinformation 100 erfolgen.

In oder an, insbesondere innerhalb, der Aufzugkabine 3 kann eine Initiierungsstruktur 8 angeordnet oder ausgebildet sein. Das Erzeugen der temporären drahtlosen Kommunikationsinfrastruktur 4 innerhalb der Aufzugkabine 3 kann beispielsweise über die der Aufzugkabine 3 zugeordnete Kommunikationsinfrastrukturerzeugungseinrichtung 5 nach Erfassen der Initiierungsstruktur 8 durch das Kommunikationsgerät 6 des in der Aufzugkabine 3 befindlichen Nutzers 7 erfolgen. Hierzu kann die Initiierungsstruktur 8 als 2D-Code (z. B. QR-Code) oder als Bar-Code ausgebildet sein, der vorzugweise über eine optische Erfassungseinrichtung 12 des Kommunikationsgeräts 6 erfassbar ist.

Über die Kommunikationsinfrastruktur 4 wird eine, insbesondere bidirektionale, Kommunikationsverbindung 9 zwischen dem Kommunikationsgerät 6 des in der Aufzugkabine 3 befindlichen Nutzers 7 und einem externen Kommunikationspartner 10 hergestellt. Der Kommunikationspartner 10 kann über einen an seinem Ort bereitgestellten Rechner 11 mit der Kommunikationsinfrastrukturerzeugungseinrichtung 5 verbunden sein. Hierbei wird die Kommunikationsverbindung 9 über das mit der innerhalb der Aufzugkabine 3 bereitgestellten drahtlosen Kommunikationsinfrastruktur 4 verbundenen Kommunikationsgerät 6 des in der Aufzugkabine 3 befindlichen Nutzers 7 aufgebaut.

Der Rechner 11 des Kommunikationspartner 10 kann in dem die Aufzuganlage 1 umfassenden Gebäude oder an einem von dem die Aufzuganlage 1 umfassenden Gebäude entfernten Ort platziert sein.

Über die hergestellte Kommunikationsverbindung 9 zwischen dem Kommunikationsgerät 6 des in der Aufzugkabine 3 befindlichen Nutzers 7 und dem externen Kommunikationspartner 10 können Audio- und/oder Videoinformationen von dem nutzerseitigen Kommunikationsgerät 6 an den externen Kommunikationspartner 10 und/oder von dem externen Kommunikationspartner 10 an das nutzerseitige Kommunikationsgerät 6 übertragen werden. Hierbei können Audio- und/oder Videoinformationen an ein Anzeigemittel des Rechners 11 des Kommunikationspartner 10 ausgegeben werden.

Auch kann über die hergestellte Kommunikationsverbindung zwischen dem Kommunikationsgerät 6 des in der Aufzugkabine 3 befindlichen Nutzers 7 und dem externen Kommunikationspartner 10 an den Nutzer 7 gerichtete Handlungsanweisungen beschreibende Handlungsinformationen an das Kommunikationsgerät 6 des in der Aufzugkabine 3 befindlichen Nutzers 7 übertragen werden. Damit kann der Nutzer 7 durch die optische, haptische und/oder akustische Wahrnehmung der Ausgabeelemente (z. B. der als Ausgabegeräte nutzbaren Funktionseinheiten 13) seines Kommunikationsgerät 6 eine an ihn gerichtete Handlungsanweisung beschreibende Handlungsinformation empfangen. Alternativ oder zusätzlich kann über die hergestellte Kommunikationsverbindung 9 zwischen dem Kommunikationsgerät 6 des in der Aufzugkabine 3 befindlichen Nutzers 7 und dem externen Kommunikationspartner 10 an den Nutzer 7 gerichtete, den Status der Notrufsituation, insbesondere den Status der Behebung der Notrufsituation, beschreibende Statusinformationen an das Kommunikationsgerät 6 des in der Aufzugkabine 3 befindlichen Nutzers 7 übertragen werden. Hierzu kann beispielsweise ein Fortschrittsbalken (nicht dargestellt) an einem Anzeigeeinheit 28 des Kommunikationsgerät 6 ausgegeben werden.

Über die hergestellte Kommunikationsverbindung 9 kann zwischen dem Kommunikationsgerät 6 des in der Aufzugkabine 3 befindlichen Nutzers 7 und dem externen Kommunikationspartner 10 den Zustand des Nutzers 7, insbesondere den Gesundheitszustand des Nutzers 7, beschreibende Nutzerzustandsinformationen an den externen Kommunikationspartner 10 übertragen werden. Hierzu kann ein Fragenkatalog an den Nutzer 7 kommuniziert werden, dessen Antworten einen Rückschluss auf den Nutzerzustand erlauben und damit eine Nutzerzustandsinformation darstellen können. Alternativ oder zusätzlich kann das Kommunikationsgerät 6 eine Erfassungseinrichtung 12, insbesondere eine Zustandserfassungseinrichtung, umfassen, die es erlaubt optische, akustische und/oder haptische bzw. taktile Informationen zu erfassen und diese als Nutzerzustandsinformationen an den kommunikationspartnerseitigen Rechner 11 zu übermitteln. Die Erfassungseinrichtung 12 kann dabei eine typischerweise für andere Aufgaben genutzte Sensoreinheit, z. B. eine Frontkamera 14 bzw. Selfie-Kamera oder eine Rückkamera 15 bzw. Hauptkamera an der Mobiltelefonrückseite, sein. Alternativ oder zusätzlich kann das Kommunikationsgerät 6 wenigstens eine spezifische, d. h. darauf optimierte Zustandserfassungseinrichtung umfassen, welche es erlaubt z. B. einen Vitalparameter des Nutzers 7 oder andersartige optisch, akustisch und/oder taktile Auffälligkeiten des Nutzers 7 zu detektieren.

Über die hergestellte Kommunikationsverbindung 9 zwischen dem Kommunikationsgerät 6 des in der Aufzugkabine 3 befindlichen Nutzers 7 und dem externen Kommunikationspartner 10 kann es vorgesehen sein, unabhängig von etwaigen Bedienhandlungen des Nutzers 7 wenigstens einen Betriebszustand wenigstens einer kommunikationsgeräteseitigen Funktionseinheit 13, insbesondere einer Audio- und/oder Videoerfassungseinrichtung, steuernde Steuerungsinformationen von dem externen Kommunikationspartner 10 an das Kommunikationsgerät 6 des in der Aufzugkabine 3 befindlichen Nutzers 7 zu übertragen. Damit kann der Kommunikationspartner 10, beispielsweise durch über seinen Rechner 11 erzeugte Steuerungsinformationen, steuernd und/oder regelnd auf wenigstens eine Funktionseinheit 13 des Kommunikationsgeräts 6 Einfluss nehmen.

Funktionseinheiten 13 des Kommunikationsgerät 6 können beispielsweise sein: eine Erfassungseinrichtung 12, z. B. eine Front-Kamera 14, eine Rück-Kamera 15, ein Vibrations- bzw. Beschleunigungssensor 16, ein Mikrofon 17, ein Fingerabdruckscanner 18, ein Näherungssensor 19 (z. B. für die Positionserfassung eines Ohrs), ein Helligkeitssensor 20, ein Neigungssensor 21, ein Gyroskopsensor 22 bzw. Rotationssensor, ein Temperatursensor 23, ein Magnetfeldsensor 24, ein Luftdrucksensor 25 und/oder ein Datenspeicher 26. Beispielsweise kann der Luftdrucksensor 25 verwendet werden, die Position des Nutzers 7 bzw. der Aufzugkabine 3 innerhalb der Fahrbahn 2 der Aufzuganlage 1 zu ermitteln.

Das Erzeugen der eine Notrufsituation der Aufzuganlage 1 beschreibenden Notrufinformation 100 kann z. B. durch Betätigen eines aufzugkabinenseitigen Betätigungselements 27 erfolgen.

Nach einem Verbinden des Kommunikationsgeräts 6 des in der Aufzugkabine 3 befindlichen Nutzers 7 mit der innerhalb der Aufzugkabine 3 bereitgestellten oder erzeugten drahtlosen Kommunikationsinfrastruktur 4 kann z. B. ein, insbesondere automatisiertes, Herunterladen einer, seitens eines Betreibers der Aufzuganlage 1 bereitgestellten Notsituationssoftware auf das Kommunikationsgerät 6 des Nutzers 7 und/oder ein, insbesondere automatisiertes, Aktivieren einer auf dem Kommunikationsgerät 6 des Nutzers 7 befindlichen Notsituationssoftware erfolgen. Die Notsituationssoftware kann im Falle des Herunterladens in dem kommunikationsgerätseitigen Datenspeicher 27 abgelegt werden. Vermittels der Notsituationssoftware kann eine Abfrage von die Notrufsituation und/oder den Zustand des in der Aufzugkabine 3 befindlichen Nutzers 7 betreffenden Abfrageinformationen und/oder ein Ausgeben von Handlungsanweisungen an den in der Aufzugkabine 3 befindlichen Nutzer betreffende Handlungsanweisungsinformationen initiiert werden.

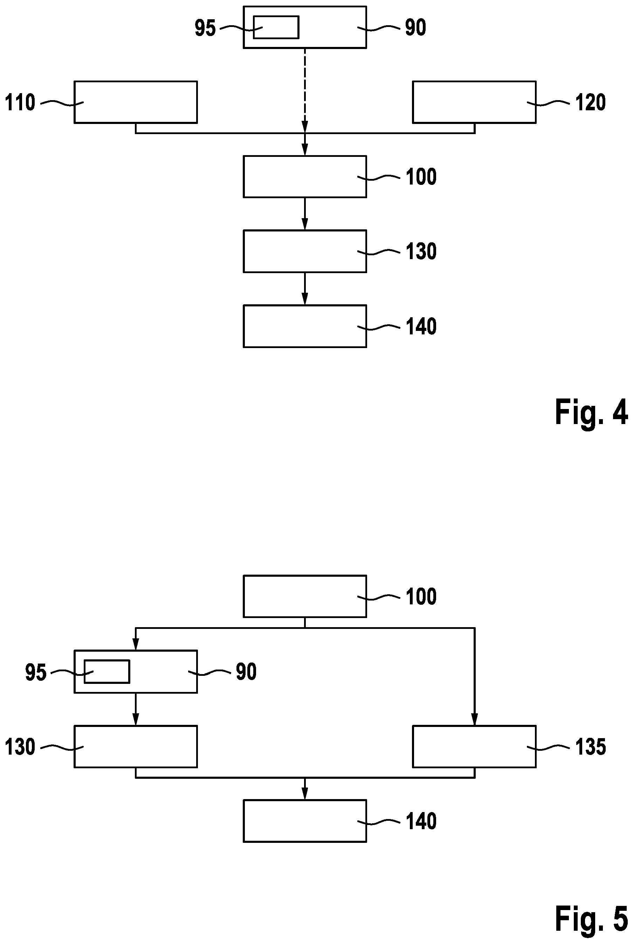

In der Figur 4 ist ein möglicher Ablauf dargestellt. In einem ersten Schritt kann ein Nutzer eine Installation 90 einer Notsituationssoftware 95 auf das Kommunikationsgerät 6 des in der Aufzugkabine 3 befindlichen Nutzers 7 erfolgen. Hierzu kann der Nutzer 7 - auch außerhalb der Aufzugkabine 3 - eine Installation 90 des Programms bzw. der App bzw. der Notsituationssoftware 95 ausführen.

Im Fall einer Notrufsituation kann diese z. B. manuell durch den Nutzer 7 durch die Betätigung eines aufzuganlagenseitigen Betätigungselements 27 oder durch Eingabe in das Kommunikationsgerät 6 erkannt bzw. eine hierzu vorgesehene Notrufinformation 100 erzeugt werden. Damit kann eine nutzerseitig erzeugte Notrufinformation 100 erfolgen (nutzerseitige Erzeugung 110). Alternativ oder zusätzlich hierzu kann durch eine kommunikationsgerätseitige und/oder durch eine aufzuganlagenseitige Erfassungseinrichtung und/oder durch einen Kommunikationspartner 10 eine Notrufsituation erkannt bzw. eine Notrufinformation 100 erzeugt werden, dies kann als nicht-nutzerseitig Erzeugung 120 der Notrufinformation 100 bezeichnet werden.

Da im in Figur 4 gezeigten Beispiel zum Zeitpunkt der Erzeugung Notrufinformation 100 bereits die Notsituationssoftware 95 bereits auf dem Kommunikationsgerät 6 des in der Aufzugkabine 3 befindlichen Nutzers 7 installiert ist, kann ohne weitere Verzögerung ein Aufbau 130 einer Kommunikationsverbindung 9 erfolgen. Schließlich kann ein Datenaustausch 140 zwischen dem Kommunikationsgerät 6 und dem Rechner 11 bzw. zwischen dem Nutzer 7 und/oder der Kommunikationspartner 10 erfolgen.

In dem Ausführungsbeispiel gemäß Figur 5 kann es vorgesehen sein, dass zum Zeitpunkt der Notrufsituation keine Notsituationssoftware 95 auf dem Kommunikationsgerät 6 installiert ist. Damit wird zunächst eine Notrufinformation 100 durch Betätigung des Betätigungselements 27 durch den in der Aufzugkabine 7 befindlichen Nutzer 7 und/oder durch den Kommunikationspartner 10 erzeugt bzw. initiiert. Danach kann der Nutzer 7 zum Installieren 90 des Notsituationsprogramms 95 aufgefordert werden und dieser eine Installation 90 ausführen, danach kann der Aufbau 130 der Kommunikationsverbindung 9 sowie der Datenaustausch 140 analog zu Figur 4 erfolgen.

Sofern der Nutzer 7 keine Installation 7 ausführen möchte oder aus anderen Gründen nicht ausführbar ist, besteht die Möglichkeit einen auf dem Kommunikationsgerät 6 des Nutzers 7 befindlichen Browser (nicht dargestellt) zum Datenaustausch 140 zu verwenden. Hierzu kann dem Nutzer 7 ein Link bereitgestellt (z. B. in visuell wahrnehmbarer Form innerhalb der Aufzugkabine 3) oder übermittelt (z. B. via SMS) werden. Im Zuge des Aufrufens der Linkinformationen in einem kommunikationsgerätseitigen Browser erfolgt ein browsergestützter Aufbau 135 einer Kommunikationsverbindung 9 für einen Datenaustausch 140 zwischen dem in der Aufzugkabine befindlichen Nutzer 7 und dem externen Kommunikationspartner 10.

Die Kommunikationsinfrastruktur 4 kann als eine, gegebenenfalls verschlüsselte, Bluetooth- und/oder WLAN-Infrastruktur bereitgestellt bzw. erzeugt werden.

Kommunikationsinfrastrukturerzeugungseinrichtung 5 für eine Aufzuganlage, insbesondere für eine hierin beschriebene Aufzuganlage kann in Abhängigkeit des Vorliegens einer entsprechenden Notrufinformation 100 zum Erzeugen einer temporären drahtlosen Kommunikationsinfrastruktur 4 innerhalb einer Aufzugkabine 3 eingerichtet sein. Hierbei kann die Kommunikationsinfrastrukturerzeugungseinrichtung 5 als Nachrüstsatz konzipiert sein und an konventionelle bzw. bestehende Aufzuganlagen 1, insbesondere an bestehende Aufzugkabinen 3, nachgerüstet werden, um dieser den erfindungsgemäß erweiterten Funktionsumfang zu ermöglichen. Dabei kann die Kommunikationsinfrastrukturerzeugungseinrichtung 5 über kabelgebundene oder kabellose Schnittstellen vorzugsweise in ein bestehendes Stromversorgungssystem (nicht dargestellt) der Aufzuganlage 1 und/oder an ein bestehendes Steuerungssystem (nicht dargestellt) der Aufzuganlage 1 eingebunden bzw. gekoppelt werden. Alternativ oder zusätzlich kann die Kommunikationsinfrastrukturerzeugungseinrichtung 5 eine autarke Einheit bilden, welche von einem Stromversorgungssystem der Aufzuganlage 1 und/oder von einem Steuerungssystem der Aufzuganlage 1 unabhängig betreibbar ist. Hierbei kann die unabhängige Betreibbarkeit der Kommunikationsinfrastrukturerzeugungseinrichtung 5 zeitlich begrenzt oder zumindest nahezu ohne zeitliche Begrenzung erfolgen.

### BEZUGSZEICHENLISTE

- 1: Aufzuganlage
- 2: Fahrbahn
- 3: Aufzugkabine
- 4: Kommunikationsinfrastruktur
- 5: Kommunikationsinfrastrukturerzeugungseinrichtung
- 6: Kommunikationsgerät
- 7: Nutzer
- 8: Initiierungsstruktur
- 9: Kommunikationsverbindung
- 10: externer Kommunikationspartner
- 11: Rechner
- 12: Erfassungseinrichtung
- 13: Funktionseinheit
- 14: Frontkamera
- 15: Rückkamera
- 16: Beschleunigungssensor
- 17: Mikrofon
- 18: Fingerabdrucksensor
- 19: Näherungssensor
- 20: Helligkeitssensor
- 21: Neigungssensor
- 22: Gyroskopsensor
- 23: Temperatursensor
- 24: Magnetfeldsensor
- 25: Luftdrucksensor
- 26: Datenspeicher
- 27: Betätigungselement
- 28: Anzeigemittel
- 90: Installation
- 95: Notsituationssoftware
- 100: Notrufinformation
- 110: nutzerseitige Erzeugung von 100
- 120: nicht-nutzerseitige Erzeugung von 100
- 130: Aufbau von 9
- 135: browsergestützter Aufbau von 9
- 140: Datenaustausch

## Patentansprüche

1. Verfahren zum Betrieb einer Aufzuganlage (1), insbesondere einer Personenaufzuganlage, umfassend eine entlang einer Fahrbahn (2) bewegbar gelagerte Aufzugkabine (3), mit den Schritten:
- Erzeugen einer eine Notrufsituation der Aufzuganlage (1) beschreibenden Notrufinformation (100);
- Bereitstellen einer zumindest temporären drahtlosen Kommunikationsinfrastruktur (4) innerhalb der Aufzugkabine (3) über eine der Aufzugkabine (3) zugeordnete Kommunikationsinfrastrukturerzeugungseinrichtung (5),
- Verbinden eines Kommunikationsgeräts (6) eines in der Aufzugkabine (3) befindlichen Nutzers (7) mit der innerhalb der Aufzugkabine (3) erzeugten drahtlosen Kommunikationsinfrastruktur (4), und
- Erzeugen der zumindest temporären drahtlosen Kommunikationsinfrastruktur (4) innerhalb der Aufzugkabine (3) über die der Aufzugkabine (3) zugeordnete Kommunikationsinfrastrukturerzeugungseinrichtung (5) in Abhängigkeit des Vorliegens einer Notrufinformation (100) **dadurch gekennzeichnet, dass**
das Erzeugen der eine Notrufsituation der Aufzuganlage beschreibenden Notrufinformation (100) durch
• ein Betätigen eines aufzugkabinenseitigen Betätigungselements (27) erfolgt oder
• eine kommunikationsgerätseitige Eingabeeinrichtung erfolgt oder
• eine außerhalb der Aufzugkabine befindliche Person erfolgt oder
• einen mit einer eine Notrufsituation erfassenden Erfassungseinrichtung verbundenen Rechner (11) automatisiert erfolgt, wobei die Aufzugkabine (3) mit einer einen Innenraum der Aufzugkabine (3) erfassenden Kamera ausgestattet ist und der ein Bild dieser Kamera automatisiert analysierende Rechner (11) bei Vorliegen eines vordefinierten Notfallmusters eine Notrufinformation (100) automatisiert erzeugt.

2. Verfahren nach Anspruch 1, **dadurch gekennzeichnet, dass** das Erzeugen der temporären drahtlosen Kommunikationsinfrastruktur (4) innerhalb der Aufzugkabine (3) über die der Aufzugkabine (3) zugeordnete Kommunikationsinfrastrukturerzeugungseinrichtung (5) nach Erfassen einer aufzugkabinenseitig angeordneten oder ausgebildeten Initiierungsstruktur (8), insbesondere eines Bar- oder QR-Codes, durch das Kommunikationsgerät (6) des in der Aufzugkabine (3) befindlichen Nutzers (7) erfolgt.

3. Verfahren nach Anspruch 1 oder 2, **gekennzeichnet durch** Herstellen einer, insbesondere bidirektionalen, Kommunikationsverbindung (9) zwischen dem Kommunikationsgerät (6) des in der Aufzugkabine (3) befindlichen Nutzers (7) und einem externen Kommunikationspartner (10) über das mit der innerhalb der Aufzugkabine (3) bereitgestellten drahtlosen Kommunikationsinfrastruktur (4) verbundenen Kommunikationsgerät (6) des in der Aufzugkabine (3) befindlichen Nutzers (7).

4. Verfahren nach Anspruch 3, **dadurch gekennzeichnet, dass** über die hergestellte Kommunikationsverbindung (9) zwischen dem Kommunikationsgerät (6) des in der Aufzugkabine (3) befindlichen Nutzers (7) und dem externen Kommunikationspartner (10) Audio- und/oder Videoinformationen von dem nutzerseitigen Kommunikationsgerät (6) an den externen Kommunikationspartner (10) und/oder von dem externen Kommunikationspartner (10) an das nutzerseitige Kommunikationsgerät (6) übertragen werden.

5. Verfahren nach Anspruch 3 oder 4, **dadurch gekennzeichnet, dass** über die hergestellte Kommunikationsverbindung (9) zwischen dem Kommunikationsgerät (6) des in der Aufzugkabine (3) befindlichen Nutzers (7) und dem externen Kommunikationspartner (10) an den Nutzer (7) gerichtete Handlungsanweisungen beschreibende Handlungsinformationen an das Kommunikationsgerät (6) des in der Aufzugkabine (3) befindlichen Nutzers (7) übertragen werden.

6. Verfahren nach einem der Ansprüche 3 bis 5, **dadurch gekennzeichnet, dass** über die hergestellte Kommunikationsverbindung (9) zwischen dem Kommunikationsgerät (6) des in der Aufzugkabine (3) befindlichen Nutzers (7) und dem externen Kommunikationspartner (10) an den Nutzer (7) gerichtete, den Status der Notrufsituation, insbesondere den Status der Behebung der Notrufsituation, beschreibende Statusinformationen an das Kommunikationsgerät (6) des in der Aufzugkabine (3) befindlichen Nutzers (7) übertragen werden.

7. Verfahren nach einem der Ansprüche 3 bis 6, **dadurch gekennzeichnet, dass** über die hergestellte Kommunikationsverbindung (9) zwischen dem Kommunikationsgerät (6) des in der Aufzugkabine (3) befindlichen Nutzers (7) und dem externen Kommunikationspartner (10) den Zustand des Nutzers (7), insbesondere den Gesundheitszustand des Nutzers (7), beschreibende Nutzerzustandsinformationen an den externen Kommunikationspartner (10) übertragen werden.

8. Verfahren nach einem der Ansprüche 3 bis 7, **dadurch gekennzeichnet, dass** über die hergestellte Kommunikationsverbindung (9) zwischen dem Kommunikationsgerät (6) des in der Aufzugkabine (3) befindlichen Nutzers (7) und dem externen Kommunikationspartner (10) unabhängig von Bedienhandlungen des Nutzers (7) wenigstens einen Betriebszustand wenigstens einer kommunikationsgeräteseitigen Funktionseinheit (13), insbesondere einer Audio- und/oder Videoerfassungseinrichtung, steuernde Steuerungsinformationen von dem externen Kommunikationspartner (10) an das Kommunikationsgerät (6) des in der Aufzugkabine (3) befindlichen Nutzers (7) übertragen werden.

9. Verfahren nach einem der vorhergehenden Ansprüche, **dadurch gekennzeichnet, dass** nach Verbinden des Kommunikationsgeräts (6) des in der Aufzugkabine (3) befindlichen Nutzers (7) mit der innerhalb der Aufzugkabine (3) bereitgestellten oder erzeugten drahtlosen Kommunikationsinfrastruktur (4) ein, insbesondere automatisiertes, Herunterladen einer seitens eines Betreibers der Aufzuganlage bereitgestellten Notsituationssoftware (95) auf das Kommunikationsgerät (6) des Nutzers (7) und/oder ein, insbesondere automatisiertes, Aktivieren einer auf dem Kommunikationsgerät (6) des Nutzers (7) befindlichen Notsituationssoftware (95) und/oder ein kommunikationsgerätseitiger Betrieb einer browsergestützten Notsituationssoftware (95) erfolgt.

10. Verfahren nach Anspruch 9, **dadurch gekennzeichnet, dass** vermittels der Notsituationssoftware (95) eine Abfrage von die Notrufsituation und/oder den Zustand des in der Aufzugkabine (3) befindlichen Nutzers (7) betreffenden Abfrageinformationen und/oder ein Ausgeben von Handlungsanweisungen an den in der Aufzugkabine (3) befindlichen Nutzer betreffende Handlungsanweisungsinformationen initiiert wird.

11. Verfahren nach einem der vorhergehenden Ansprüche, **dadurch gekennzeichnet, dass** die Kommunikationsinfrastruktur (4) als eine, gegebenenfalls verschlüsselte, Funkverbindung bereitgestellt bzw. erzeugt wird, insbesondere umfasst die Kommunikationsinfrastruktur (4) eine WLAN-Infrastruktur und/oder eine Bluetooth-Infrastruktur und/oder eine RFID-Infrastruktur und/oder eine Near Field Communication (NFC) Infrastruktur und/oder eine Universal Mobile Telecommunications System (UMTS)-Infrastruktur und/oder eine Next Generation Mobile Networks (NGMN)-Infrastruktur und/oder eine Mobilfunknetzinfrastruktur.

## Claims

1. Method for operating a lift system (1), in particular a passenger lift system, comprising a lift cabin (3) movable along a roadway (2), with the steps:
- Generate an emergency call situation of the lift system (1) descriptive emergency call information (100);
- Provide at least temporary wireless communication infrastructure (4) within the lift cabin (3) via a communication infrastructure generating device associated with the lift cabin (3),
- Connect a communication device (6) of a user located in the lift cabin (3) (7) to the wireless communication infrastructure generated within the lift cabin (3), and
- Generate the at least temporary wireless communication infrastructure (4) within the lift cabin (3) via the communication infrastructure generation device (5) associated with the lift cabin (3), depending on the presence of an emergency call information (100) **characterised in that** the generation of emergency call information (100) describing an emergency call situation of the lift system
• an operating element (27) is actuated on the side of a lift cabin; or
• a communication device-side input device is carried out, or
• a person outside the lift cabin; or
• a computer connected to an emergency situation detection device (11) is automated, wherein the lift cabin (3) is equipped with a camera detecting an interior of the lift cabin (3) and which automatically generates an image of this camera analyser (11) in the presence of a predefined emergency pattern an emergency call information (100).

2. Method according to claim 1, **characterised in that** the generation of the temporary wireless communication infrastructure infrastructure (4) within the lift cabin (3) via the communication infrastructure generation device (5) assigned to the lift cabin (3) after capturing a cable cabin side arranged or formed initiation structure (8), in particular a bar or QR code, by the communication device (6) of the user located in the lift cabin (3) (7).

3. Method according to claim 1 or 2, **characterised by** the establishment of a, in particular bidirectional, communication connection (9) between the communication device (6) of the user located in the lift cabin (3) and an external communication partner (10) via the communication device (6) of the user located in the lift cabin (3) connected to the wireless communication infrastructure provided within the lift cabin (3) (7).

4. Method according to claim 3, **characterised in that** via the manufactured communication connection (9) between the communication device (6) of the user in the lift cabin (3) and the external communication partner (10) audio and/or video information from the user-side communication device (6) to the external communication partner (10) and/or from the external communication partner (10) to the user-side communication device (6) are transmitted.

5. Method according to claim 3 or 4, **characterised in that**, via the established communication connection (9) between the communication device (6) of theuser (7) located in the lift cabin (3) and the external communication partner (10) directed to the user (7), descriptive action information is transmitted to the communication device (6) of the user located in the lift cabin (3) (7).

6. Method according to any one of claims 3 to 5, **characterised in that** via the established communication connection (9) between the communication device (6) of the user (7) located in the lift cabin (3) and the external communication partner (10) directed to the user (7), the status of the emergency situation, in particular the status of the remedy of the emergency situation, descriptive status information to the communication device (6) of the user located in the lift cabin (3) are transmitted.

7. Method according to any one of claims 3 to 6, **characterised in that** via the established communication connection (9) between the communication device (6) of the user (7) located in the lift cabin (3) and the external communication partner (10) the state of the user (7), in particular the health of the user (7), descriptive user state information is transmitted to the external communication partner (10).

8. Method according to any one of claims 3 to 7, **characterised in that** via the established communication connection (9) between the communication device (6) of the user (7) located in the lift cabin (3) and the external communication partner (10) independently of the operating actions of the user (7) at least one operating state of at least one communication device-side functional unit (13), in particular an audio and/or video acquisition device, controlling control information from the external communication partner (10) to the communication device (6) of the user located in the lift cabin (3) are transmitted.

9. Method according to one of the preceding claims, **characterised in that** after connecting the communication device (6) of the user located in the elevator cabin (3) with the wireless communication infrastructure provided or generated within the lift cabin (3), a, in particular automated, downloading by an operator of the elevator system provided emergency situation software (95) to the communication device (6) of the user (7) and/or, in particular, automated, activation of an emergency situation software (95) located on the communication device (6) of the user (7) and/or a communication device-side operation of a browser-based emergency situation software (95) takes place.

10. Method according to claim 9, **characterised in that** by means of the emergency situation software (95) a query of the emergency call situation and/or the state of the user in the lift cabin (3) concerning query information and/or an output of action instructions to the user in the lift cabin (3) concerning instruction information is initiated.

11. Method according to one of the preceding claims, **characterised in that** the communication infrastructure (4) as a, optionally encrypted, radio connection is provided or generated, in particular the communication infrastructure (4) comprises a WLAN infrastructure and/or a Bluetooth infrastructure and/or an RFID infrastructure and/or a near field communication (NFC) infrastructure and/or a Universal Mobile Telecommunications System (UMTS) infrastructure and/or a Next Generation Mobile Networks (NGMN) infrastructure and/or a mobile network infrastructure and/or a mobile network infrastructure.

## Revendications

1. Procédé d'exploitation d'un système d'ascenseur (1), en particulier d'un système d'ascenseur pour personnes, comprenant une cabine d'ascenseur (3), accessible le long d'une chaussée (2), comportant les étapes suivantes:
- Générer une situation d'appel d'urgence du système d'ascenseur (1) d'information d'urgence descriptive (100);
- Fournir une infrastructure de communication sans fil au moins temporaire (4) à l'intérieur de la cabine d'ascenseur (3) par l'intermédiaire d'un dispositif de génération d'infrastructure de communication associé à la cabine d'ascenseur (3) (5);
- Relier un appareil de communication (6) d'un utilisateur dans la cabine d'ascenseur (3) à l'infrastructure de communication sans fil produite à l'intérieur de la cabine d'ascenseur (3) (4), et
- L' infrastructure de communication sans fil au moins temporaire (4) à l'intérieur de la cabine d'ascenseur (3), par l'intermédiaire du dispositif de génération d'infrastructure de communication affecté à la cabine d'ascenseur (3) (5), produit en fonction de l'existence d'une information d'urgence (100)en ce que:
la production d'informations d'urgence décrivant une situation d'appel d'urgence de l'installation d'ascenseur (100) par:
• l'actionnement d'un élément de commande côté cabine d'ascenseur (27) est effectué; ou
• un dispositif d'entrée côté de l'appareil de communication a lieu; ou
• une personne se trouve à l'extérieur de la cabine de l'ascenseur, ou
• un ordinateur connecté à un dispositif de détection d'appel d'urgence (11) est automatisé, la cabine d'ascenseur (3) étant équipée d'une caméra capturant un intérieur de la cabine d'ascenseur (3) et qui génère automatiquement une image de cette caméra d'analyse automatique (11) en présence d'un modèle d'urgence prédéfini (100).
•

2. Procédé selon la revendication 1, **caractérisé en ce que** la création de l'infrastructure temporaire de communication sans fil (4) à l'intérieur de la cabine d'ascenseur (3) par l'intermédiaire de l'équipement de génération d'infrastructure de communication affecté à la cabine d'ascenseur (3) (5), après avoir saisi une structure d'initiation disposée ou formée côté ascenseur (8), en particulier un code bar ou QR, est effectuée par l'appareil de communication (6) de l'utilisateur qui se trouve dans la cabine d'ascenseur (3) (7).

3. Procédé selon la revendication 1 ou 2, **caractérisé par** lacréation d'une connexion de communication, notamment bidirectionnelle, entre l'appareil de communication (6) de l'utilisateur situé dans la cabine d'ascenseur (3) et un partenaire de communication externe (10) par l'intermédiaire de l'appareil de communication sans fil raccordé à l'infrastructure de communication sans fil fournie à l'intérieur de la cabine d'ascenseur (3) (6) de l'utilisateur dans la cabine d'ascenseur (3) (7).

4. Procédé selon la revendication 3, **caractérisé en ce que**, par le biais de la connexion de communication établie (9) entre l'appareil de communication (6) de l'utilisateur qui se trouve dans la cabine (3) et le partenaire de communication externe (10) les informations audio et/ou vidéo sont transmises de l'appareil de communication côté utilisateur (6) au partenaire de communication externe (10) et/ou du partenaire de communication externe (10) à l'appareil de communication côté utilisateur (6).

5. Procédé selon la revendication 3 ou 4, **caractérisé en ce que**, par le biais de la connexion de communication établie (9) entre l'appareil de communication (6) de l'utilisateur qui se trouve dans la cabine (3) et le partenaire externe de communication (10) à l'utilisateur (7), des informations d'action descriptives sont transmises à l'appareil de communication (6) de l'utilisateur qui se trouve dans la cabine d'ascenseur (3) (7).

6. Procédé selon l'une des revendications 3 à 5, **caractérisé en ce que**, par le biais de la connexion de communication établie (9) entre l'appareil de communication (6) de l'utilisateur dans la cabine d'ascenseur (3) et le partenaire de communication externe (10) adressé à l'utilisateur (7), le statut de la situation d'appel d'urgence, en particulier le statut de la réparation de la situation d'urgence, est transmis à l'appareil de communication (6) de l'utilisateur dans la cabine d'ascenseur (3) (7).

7. Procédé selon l'une des revendications 3 à 6, **caractérisé en ce que**, par le biais de la connexion de communication établie (9) entre l'appareil de communication (6) de l'utilisateur dans la cabine (3) et le partenaire de communication externe (10), l'état de l'utilisateur (7), en particulier l'état de santé de l'utilisateur (7), est transmis au partenaire externe de communication (10).

8. Procédé selon l'une des revendications 3 à 7, **caractérisé en ce que**, par le biais de la connexion de communication établie (9) entre l'appareil de communication (6) de l'utilisateur qui se trouve dans la cabine (3) et le partenaire de communication externe (10), indépendamment des opérations de l'utilisateur (7), au moins un état de fonctionnement au moins d'une unité fonctionnelle de l'appareil de communication (13), en particulier un dispositif d'acquisition audio et/ou vidéo, est transmis par le partenaire de communication externe (10) à l'appareil de communication (6) de l'utilisateur situé dans la cabine d'ascenseur (3) (7).

9. Procédé selon l'une des revendications précédentes, **caractérisé en ce que**,après connexion de l'appareil de communication (6) de l'utilisateur dans la cabine d'ascenseur (3) (7) avec l'infrastructure de communication sans fil fournie ou produite à l'intérieur de la cabine (3), il est procédé, notamment, au téléchargement automatisé d'un logiciel d'urgence (95) mis à disposition par un opérateur de l'ascenseur (95) sur l'appareil de communication (6) de l'utilisateur (7) et/ou à l'activation, notamment automatisée, d'un logiciel d'urgence (95) situé sur l'appareil de communication (6) de l'utilisateur (7) et/ou d'un fonctionnement côté appareil de communication d'un logiciel d'urgence fondé sur un navigateur (95).

10. Procédé selon la revendication 9, **caractérisé en ce que** le logiciel d'urgence (95) initie une consultation de la situation d'appel d'urgence et/ou de l'état de l'utilisateur dans la cabine d'ascenseur (3) (7) et/ou l'envoi d'instructions d'action aux informations d'instruction d'action concernant l'utilisateur situé dans la cabine d'ascenseur (3).

11. Procédé selon l'une des revendications précédentes, caractérisé en ce quel'infrastructure de communication (4) est fournie ou produite en tant que connexion radio, le cas échéant cryptée, l'infrastructure de communication (4) comprend notamment une infrastructure Wi-Fi et/ou une infrastructure Bluetooth et/ou une infrastructure RFID et/ou une infrastructure de communication en champ proche (NFC) et/ou une infrastructure de télécommunications mobiles universelles (UMTS) et/ou une infrastructure de réseau mobile de nouvelle génération (NGMN) et/ou une infrastructure de réseau mobile.
